# EUROPÄISCHE PATENTSCHRIFT

(11) **EP 3 715 126 B1**
(45) Veröffentlichungstag und Bekanntmachung des Hinweises auf die Patenterteilung: **09.11.2022**
(21) Anmeldenummer: 19215225.4
(22) Anmeldetag: 11.12.2019
(51) Int. Cl.: B41F 33/00

(54) **FÄRBUNGSKOMPENSATION IM OFFSETDRUCK**
COLOUR COMPENSATION IN OFFSET PRINTING
COMPENSATION DE COULEURS DANS L'IMPRESSION OFFSET

(30) Priorität: 09.01.2019 DE 102019200185
(43) Veröffentlichungstag der Anmeldung: 30.09.2020
(73) Patentinhaber: Heidelberger Druckmaschinen AG, 69115 Heidelberg (DE)
(72) Erfinder: Hauck, Axel, 76227 Karlsruhe (DE)

(56) Entgegenhaltungen:
- EP-A2- 1 149 703

## Beschreibung

Die vorliegende Erfindung beschäftigt sich mit einem Verfahren zur Korrektur lokaler maschinenbedingter Färbungsfehler in einer Offsetdruckmaschine mit einem Inspektionssystem durch einen Rechner.

Die Erfindung liegt im technischen Gebiet der Farbsteuerung einer Druckmaschine.

Im Offset- und auch im Digitaldruck sind Verfahren und Anwendungen bekannt die über das Format verteilt eine Kompensation bzw. Korrektur von lokalen Färbungsabweichungen bewirken.

So kennt man im Digitaldruck die sogenannte Dichtekompensation, welche lokale Abweichungen im Druck, die durch geringfügige Abweichungen im Druckverhalten der Druckdüsen eines Inkjet-Druckkopfes verursacht werden, ausgleicht. Da diese Druckdüsen sich im Druckkopf quer zur Druckrichtung verteilen, muss auch die ausgleichende Dichtekompensation entsprechend quer zur Druckrichtung agieren. Dies geschieht zum Einen durch eine Kompensation auf den Grauwertbildern der separierten Farbauszüge vor dem Rastern, also in der Vorstufe als sogenannte Vorkompensation. Zum Anderen kennt der Stand der Technik eine Kompensation auf dem bereits gerasterten Bild im Einzelfarbenauszug während des Druckens in der Inkjet-Druckmaschine, die sogenannte Online-Kompensation.

Im Offsetdruck treten ebenfalls lokale Färbungsabweichungen auf, die hier allerdings nicht durch Druckdüsenunterschiede, sondern durch andere Ursachen, wie Einflüsse des Drucksubstrates oder der verwendeten Farbe, verursacht werden. Da beim Offsetdruck keine Online-Kompensation des Druckbildes während des Drucks mehr möglich ist, da die Druckplatten ja bereits erstellt wurden, wird hier eine Regelung von Färbungsabweichungen über Farbzonen, die ebenfalls quer zur Druckrichtung agieren, durchgeführt. Da die Farbzonen allerdings eine gewisse Mindestgröße aufweisen, ist hier eine zielgenaue Kompensation besonders sehrt kleinformatiger Färbungsabweichungen schwierig.

Der Stand der Technik kennt daher aus der deutschen Patentanmeldung DE 100 42 680 A1 eine Kompensation von lokalen Färbungsfehlern, wobei die Färbungscharakteristik der betreffenden Offset-Druckmaschine über Drucktests mit Testformen ermittelt wird und dann die zu erstellenden Druckplatten entsprechend der ermittelten Färbungscharakteristik angepasst werden, um die über die Färbungscharakteristik festgestellten, lokalen Färbungsabweichungen so gut wie möglich in einer Vorkompensation auszugleichen.

Nachteilig an diesem Ansatz ist jedoch, dass zur Ermittlung der Färbungscharakteristika der jeweiligen Offsetdruckmaschine im Voraus Drucktests mit entsprechenden Testformen durchgeführt werden müssen. Für diese Testformen müssen dabei extra Druckplatten erzeugt werden. Zudem muss ein entsprechender Druck der Testform durchgeführt werden und diese analysiert und ausgewertet werden, um damit die lokalen Färbungscharakteristiken zu ermitteln, um diese im Vorlauf eines neu durchzuführenden Druckauftrages entsprechend in die Farbsteuerung einfließen lassen zu können. Dieser zusätzliche Aufwand in Form von Zeit und Kosten senkt die Produktivität der betreffenden Offsetdruckmaschine.

Die Aufgabe der vorliegenden Erfindung besteht somit darin, ein verbessertes Verfahren zur Farbsteuerung einer Offsetdruckmaschine zu finden, welches effizienter und produktiver als die aus dem Stand der Technik bekannten Farbsteuerungsverfahren mit inkludierter Kompensation für lokale Färbungsabweichungen ist.

Die Aufgabe wird gelöst durch ein Verfahren gemäß Anspruch 1, nämlich ein Verfahren zur Korrektur lokaler, maschinenbedingter Färbungsfehler in einer Offsetdruckmaschine mit einem Bilderfassungssystem durch einen Rechner, welches die Schritte der Aufnahme von Druckbildern während der Abarbeitung von mindestens einem Druckauftrag durch das Bilderfassungssystem, des Durchführens einer Farbtransformation für die erfassten Druckbilder mittels des Rechners, der Ermittlung von lokalen Delta-Werten für Rastertonwerte durch den Rechner, der flächendeckungsabhängigen Korrektur der Delta-Werte für die Rastertonwerte durch den Rechner, des Auslesen und Analysierens von druckauftragsspezifischen Einflussparametern aus der Steuerung der Offsetdruckmaschine durch den Rechner, der Ermittlung von Korrekturwerten für die lokalen, maschinenbedingten Färbungsfehler aus den korrigierten Delta-Werten für die Rastertonwerte und den druckauftragsspezifischen Einflussparametern durch den Rechner, der Modifikation der Rastertonwerte nachfolgender Druckaufträge mit den ermittelten Korrekturwerten durch den Rechner und Erzeugung von Druckplatten mit den modifizierten Rastertonwerten und der Durchführung der Druckaufträge mit den erzeugten Druckplatten, umfasst. Das erfindungsgemäße Verfahren besteht also grundlegend betrachtet aus zwei Stufen. Die erste Stufe besteht aus der Erfassung lokaler Färbungsabweichungen für die einzelnen Druckwerke und Farbauszüge mittels des vorhandenen Bilderfassungssystems. Diese Erfassung kann bei der Durchführung normaler Druckaufträge fortlaufend geschehen, so dass eben keine extra Testformen mehr gedruckt und ausgewertet werden müssen. Da das Bilderfassungssystem ohnehin zur Überprüfung der Druckqualität sowie in vielen Fällen auch für die interne Farbkontrolle bzw. Farbsteuerung verwendet wird, ist kein zusätzlicher Aufwand zur Ermittlung der erforderlichen Informationen über die lokalen maschinenbedingten Färbungsfehler mehr notwendig. Da Offsetdruckmaschinen nach der Installation in der Druckerei sowieso mehrere Testläufe bis zur Freigabe für den produktiven Einsatz durchlaufen und auch einzelne Druckaufträge jeweils noch eine kurze Anlaufphase bis zum Beginn des Fortdrucks durchlaufen, sind die entsprechenden Gelegenheiten für das Durchführen der ersten Stufe des erfindungsgemäßen Verfahrens mittels des Bilderfassungssystems praktisch immer gegeben. Wenn die Information über die lokalen maschinenbedingten Färbungsfehler der betreffenden Offsetdruckmaschine dann erfindungsgemäß gesammelt und ausgewertet wurden, können sie zur Modifikation der Rastertonwerte nachfolgender Druckaufträge mit den erfindungsgemäß ermittelten Korrekturwerten angewandt werden. Werden die nachfolgenden bzw. allgemein die zu erledigenden Druckaufträge dann mit den modifizierten Rastertonwerten durchgeführt, fällt einerseits die Durchführung von Drucktests mit Testform im Vorlauf der Abarbeitung des entsprechenden Druckauftrags weg und andererseits startet die Farbsteuerung bereits mit wesentlich besseren Einstellwerten, so dass der Regelkreis zum Erreichen der gewünschten Zielfarbwerte des betreffenden Druckauftrages wesentlich abgekürzt wird. Da die Information über die lokalen maschinenbedingten Färbungsfehler bereits beim Start des Druckauftrages vorliegen, können bereits die Daten der Druckvorstufe, welche zur Erstellung der Druckplatten verwendet werden, entsprechend angepasst werden. Dies stellt insbesondere dadurch einen massiven Vorteil dar, da somit bereits zielgenau die Bereiche im späteren Druckbild zur Kompensation der lokalen maschinenbedingten Färbungsfehler angepasst werden können, welche von diesen betroffen sind. Denn die spätere Farbsteuerung kann bei der Offsetdruckmaschine, da die Druckplatten ja bereits erzeugt sind, immer nur die einzelnen Farbzonen anpassen, aber nicht zielgenau einzelne lokale, von den lokalen Färbungsfehlern betroffene Bereiche.

Vorteilhafte, daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass die Ermittlung von lokalen Delta-Werten für die Rastertonwerte sowie die Modifikation der Rastertonwerte nachfolgender Druckaufträge für alle separierten Farbauszüge des jeweiligen Druckauftrages durchgeführt wird. Liegen die lokalen Farbwerte der erfassten Druckbilder nach der Farbtransformation in den Maschinenfarbraum, üblicherweise CMYK, vor, können die lokalen Unterschieds-, also Deltawerte, zu den gewünschten Rastertonwerten für alle separierten Farbauszüge entsprechend ermittelt werden. Mit diesen Deltawerten der separierten Farbauszüge lassen sich dann die entsprechenden Rastertonwerte für die einzelnen Farbauszüge modifizieren und somit die erfindungsgemäß korrigierten Druckplatten erzeugen und damit der Druckauftrag mit korrigierten lokalen maschinenbedingten Färbungsfehlern durchführen.

Eine weitere bevorzugte Weiterbildung des erfindungsgemäßen Verfahrens ist dabei, dass die Aufnahme und Analyse der Druckbilder, sowie die Ermittlung der flächendeckungsabhängig korrigierten Delta-Werte für die Rastertonwerte zur anschließenden Ermittlung der Korrekturwerte für die lokalen, maschinenbedingten Färbungsfehler fortlaufend und iterativ während der Abarbeitung von Druckaufträgen geschieht. Da, wie bereits erläutert, das Bilderfassungssystem ohnehin zur Überprüfung der Druckqualität und zur Farbsteuerung eingesetzt wird, kann die erste Stufe des erfindungsgemäßen Verfahrens zur Ermittlung von Korrekturwerten für die lokalen maschinenbedingten Färbungsfehler fortlaufend und iterativ während der Abarbeitung von Druckaufträgen durchgeführt werden, was eine fortlaufende Verbesserung der Korrekturwerte für die betreffende Offsetdruckmaschine nach sich zieht. Das heißt, je länger das erfindungsgemäße Verfahren auf einer entsprechenden Offsetdruckmaschine durchgeführt wird, desto größer wird die Datenbasis über die lokalen maschinenbedingten Färbungsfehler und desto genauer werden die Korrekturwerte und desto besser wird die Farbsteuerung der betreffenden Offsetdruckmaschine angepasst.

Eine weitere bevorzugte Weiterbildung des erfindungsgemäßen Verfahrens ist dabei, dass die druckauftragsspezifischen Einflussparameter die Phase des Reibereinsatzes, Vario, Verbindung und Farbwerkschaltung umfassen. Diese druckauftragsspezifischen Einflussparameter sind zusätzliche Informationen, die für die Korrektur der lokalen maschinenbedingten Färbungsfehler notwendig sind. Das heißt, zu den maschinenbedingten Färbungsfehlern, die für die entsprechende Offsetdruckmaschine ohnehin schon individuell inhärent sind, kommen auch noch entsprechende Einflussfaktoren hinzu, welche der spezifische, auf dieser Offsetdruckmaschine durchzuführende Druckauftrag hat und welche somit die inhärenten, maschinenbedingten Färbungsfehler noch entsprechend verändern. Diese Einflussparameter müssen daher für eine genaue Korrektur der lokalen maschinenbedingten Färbungsfehler für diesen spezifischen Druckauftrag ebenfalls berücksichtigt werden.

Eine weitere bevorzugte Weiterbildung des erfindungsgemäßen Verfahrens ist dabei, dass die Korrekturwerte für die lokalen, maschinenbedingten Färbungsfehler und die druckauftragsspezifischen Einflussparameter vom Rechner für die fortlaufende und iterative Bearbeitung in einer Datenbank abgespeichert werden. Die druckauftragsspezifischen Einflussparameter werden zusammen mit den ermittelten Korrekturwerten für die lokalen maschinenbedingten Färbungsfehler dann abgespeichert. Die Korrekturwerte werden zur Durchführung der fortlaufenden und iterativen Verbesserung derselben ohnehin für jeden Druckauftrag abgespeichert. Es empfiehlt sich jedoch auch, die druckauftragsspezifischen Einflussparameter noch entsprechend mit in der Datenbank abzulegen, um somit den Einfluss spezieller Druckaufträge auf die lokalen maschinenbedingten Färbungsfehler zu überwachen. Der Vorteil liegt darin, dass insbesondere bei Druckaufträgen, die bereits vorher durchgeführten Druckaufträgen hinsichtlich der Einflussparameter ähneln, Redundanzen festgestellt werden können, welche die Ermittlung der Korrekturwerte, welche ja ebenfalls von den druckauftragsspezifischen Einflussparametern abhängig sind, ebenfalls fortlaufend und iterativ verbessern kann.

Eine weitere bevorzugte Weiterbildung des erfindungsgemäßen Verfahrens ist dabei, dass der Rechner bei Verwendung bereits kompensierter, vorheriger Druckaufträge für die Ermittlung der Korrekturwerte für die lokalen, maschinenbedingten Färbungsfehler deren bereits ermittelte Korrekturwerte berücksichtigt und diese Korrekturwerte selbstlernend optimiert. Die fortlaufende und iterative Verbesserung der ermittelten Korrekturwerte für zukünftige Druckaufträge bedingt dabei logischerweise, dass bereits vorher ermittelte Korrekturwerte entsprechend berücksichtigt werden. Dabei ist jeweils darauf zu achten, dass die vorherigen Korrekturwerte von anderen druckauftragsspezifischen Einflussparametern abhängig sind und nicht eins zu eins übernommen werden können. Die aktuellen Korrekturwerte ergeben sich stets aus den vorherigen ermittelten Korrekturwerten sowie den aktuellen Einflussparametern des aktuellen Druckauftrages. Da hier auf vorheriges Wissen zurückgegriffen wird und dieses fortlaufend verbessert werden soll, empfiehlt es sich dabei, selbstlernende Algorithmen in Form neuronaler Netze oder ähnlichem einzusetzen, welche die Korrekturwerte selbstlernend verbessern.

Eine weitere bevorzugte Weiterbildung des erfindungsgemäßen Verfahrens ist dabei, dass der Rechner die Farbtransformation der erfassten Druckbilder mittels der Anwendung von ICC-Profilen vom RGB-Farbraum des Bilderfassungssystems in den CMYK-Farbraum der Offsetdruckmaschine durchführt und somit die lokalen Delta-Werte für CMYK-Rastertonwerte ermittelt. Die Farbtransformation vom RGB-Farbraum des Bilderfassungssystems in den CMYK-Farbraum der Offsetdruckmaschine wird erfahrungsgemäß mit Hilfe von ICC-Profilen oder -Tabellen durchgeführt.

Eine weitere bevorzugte Weiterbildung des erfindungsgemäßen Verfahrens ist dabei, dass die Modifikation der Rastertonwerte nachfolgender Druckaufträge für einzelne bekannte Rastertonwerte geschieht und benachbarte Werten vom Rechner interpoliert werden. Die entsprechenden Rastertonwerte nachfolgender Druckaufträge sind meist nur für einzelne Rasterwerte bekannt, da niemals sämtliche möglichen Tonwertekombinationen für die Farbsteuerung einer Druckmaschine zur Verfügung stehen. Falls benachbarte Rastertonwerte benötigt werden, werden diese üblicherweise vom Rechner mittels bekannter Interpolationsverfahren ermittelt.

Eine weitere bevorzugte Weiterbildung des erfindungsgemäßen Verfahrens ist dabei, dass der Rechner bei der flächendeckungsabhängigen Korrektur der Delta-Werte für die Rastertonwerte den Einfluss der Farbzonenregelung, sowie bereits von der Farbregelung der Offsetdruckmaschine eingeflossene Kompensationswerte berücksichtigt. Da das erfindungsgemäße Verfahren natürlich nicht losgelöst von der eigentlichen Farbsteuerung der Offsetdruckmaschine durchgeführt werden soll, ist natürlich auch der Einfluss der entsprechenden Farbsteuerung in Form der Farbzonenregelung sowie bereits sonstiger, von der Farbsteuerung der Offsetdruckmaschine eingeflossener Kompensationswerte, zu berücksichtigen. Das erfindungsgemäße Verfahren ist also Teil der Farbsteuerung der Offsetdruckmaschine bzw. dessen inhärenten Regelungssystems.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen. Die Zeichnungen zeigen:
- Figur 1:: ein Beispiel für ein zur Bildinspektion verwendetes Bilderfassungssystem
- Figur 2:: eine Übersicht über den Ablauf des erfindungsgemäßen Verfahrens in schematischer Form
- Figur 3:: den Ablauf der ersten Stufe zur Aufnahme des Maschinenzustandes

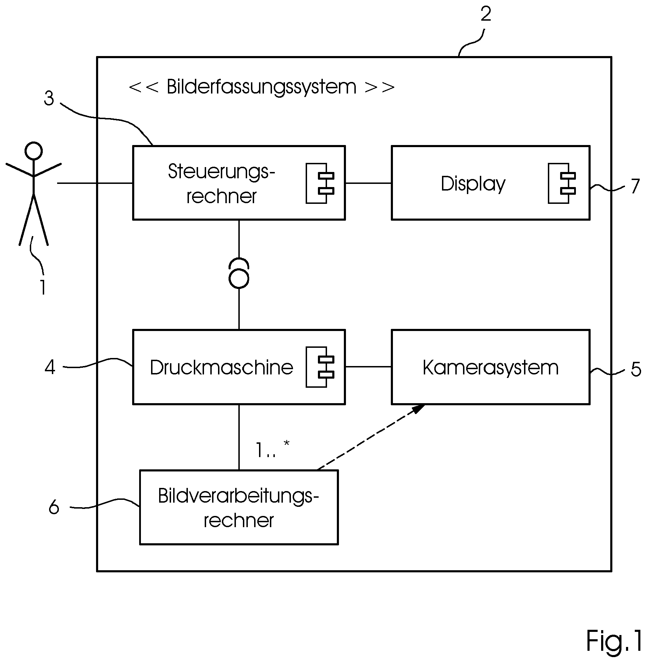

Figur 1 zeigt ein Beispiel für ein Bilderfassungssystem 2, welches das erfindungsgemäße Verfahren einsetzt. Es besteht aus mindestens einem Bildsensor 5, üblicherweise einer Kamera 5, welche in die Bogen-Druckmaschine 4 integriert ist. Die mindestens eine Kamera 5 nimmt die von der Druckmaschine 4 erzeugten Druckbilder auf und sendet die Daten an einen Rechner 3, 6 zur Auswertung. Dieser Rechner 3, 6 kann ein eigener separater Rechner 6 sein, z.B. ein oder mehrere spezialisierte Bildverarbeitungsrechner 6, oder auch mit dem Steuerungsrechner 3 der Druckmaschine 4 identisch sein. Mindestens der Steuerungsrechner 3 der Druckmaschine 4 besitzt ein Display 7, auf welchem die Ergebnisse der Bildinspektion dem Anwender 1 angezeigt werden.

Das erfindungsgemäße Verfahren hat zum Ziel für Offset-Druckmaschinen 4 lokale vorhandene Färbungsinhomogenitäten zu erfassen und zu kompensieren. Die Färbungsinhomogenitäten werden dabei nicht über Testdrucke und -formen ermittelt, sondern über entsprechende Auswertung und Datenanalysen von fortlaufenden Aufnahmen von Bilddaten 12 während des Betriebs der Offsetdruckmaschine 4 durch Mess- oder Inspektionskameras 5 des Inline-Bilderfassungssystems 2. Zudem ist auch eine initiale Aufnahme des Maschinenzustandes möglich, ebenso wie die Ist-Daten Erfassung über eine offline durchgeführte Vollformat-Einzelbogenmessung.

Die bevorzugt durchgeführte Inline-Färbungsmessung von gedruckten Bogen über das Bilderfassungssystem 2 stellt dabei die Informationen zu dem lokalen maschinenspezifischen Färbungsverhalten für eine Vielzahl von verschiedenen Druckaufträgen zur Verfügung. Aus der Druckvorstufe sind die entsprechenden Informationen zu den Ziel - bzw. Sollwerten 11 des jeweiligen Druckauftrages verfügbar. Aus der Summe dieser Daten kann der Rechner 3, 6 dann durch entsprechende Analysen das lokale Färbungsverhalten der Druckwerke ermitteln. Die Abweichungen von den Sollwerten 11 für die Einzelfarbauszüge können dann bei der Plattenherstellung für Druckaufträge bereits im Vorfeld kompensiert werden. Dabei kann die Analyse der vom Bilderfassungssystem 2 bereitgestellten Daten 12 von dessen Bildverarbeitungsrechner 6 durchgeführt werden. Die Anpassung der Druckvorstufendaten zur färbungskompensierten Herstellung der Druckplatten muss dagegen ein hierfür zuständiger Rechner 3 der Druckvorstufe durchführen. Daher ist es notwendig, dass ein ungehinderter Datenaustausch zwischen allen beteiligten Rechnern 3,6 gewährleistet ist. Bevorzugt wird dies über ein Netzwerk sichergestellt. Da für das Verständnis des erfindungsgemäßen Verfahrens nicht von Bedeutung ist, welcher Rechner 3, 6 genau nun jeweils die einzelnen Verfahrensschritte durchführt, wird dies im Folgenden nicht näher erläutert und allgemein stets von Rechner 3, 6gesprochen.

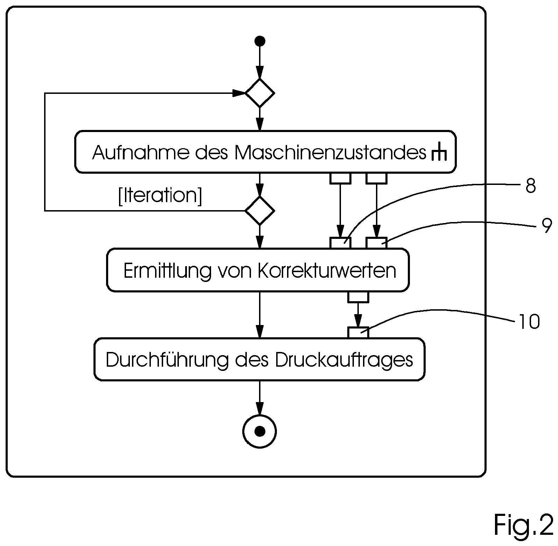

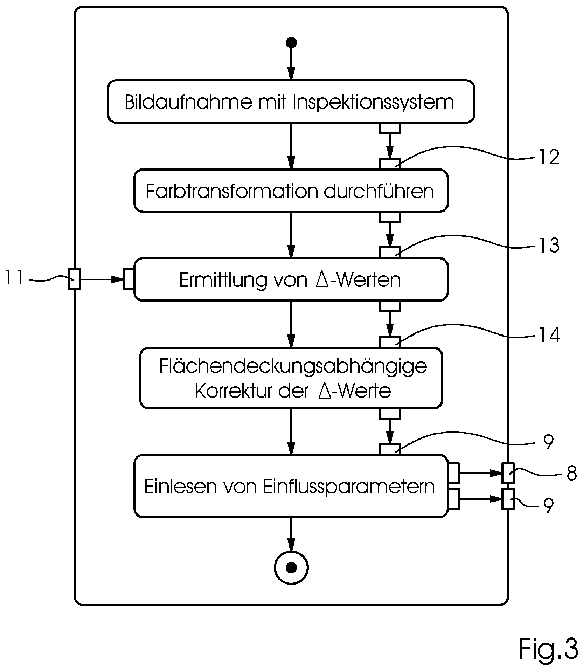

Figur 2 zeigt eine schematische Gesamtübersicht des Ablaufs des erfindungsgemäßen Verfahrens. Das Verfahren besteht aus zwei Stufen. Die erste Stufe besteht in der Aufnahme des aktuellen Maschinenzustandes bezüglich der Färbungsinhomogenität in Form von Einflussparametern 8 und korrigierten Delta-CMYK-Bilddaten 9 und wird detaillierter in Figur 3 dargestellt. Die Verfahrensschritte in der bevorzugten Ausführungsvariante sind dabei folgende:
- Vorbereitung eines Druckauftrages in der Druckvorstufe, zu Beginn ohne Kompensation, Plattenherstellung und Druck und zonales Einregeln der Farben in den Toleranzbereich.
- Vollformatige Aufnahme des gedruckten Bildes 12 über die Messkamera 5 im stationären OK-Zustand und Ermittlung der lokalen Ist Lab-Werte durch Transformation der RGB-Kameradaten 12 in Lab über ein Kamera-ICC-Profil.
- Transformation der Lab-Werte in CMYK-Bilddaten 13 über das ICC-Profil der Offset-Druckmaschine 4.
- Ermittlung der lokalen Δ-CMYK-Bilddaten 14 - also der Differenzen zwischen den Sollwerten 11 aus der Druckvorstufe und den ermittelten Ist-Werten 13, gültig für die lokalen Rastertonwerte in den üblicherweise vier Farbauszügen CMYK
- Erstellung flächendeckungsabhängiger Korrekturwerte 9 dieser Δ- CMYK-Bilddaten 14:
   ∘ zum Einen bezüglich des Einflusses der Farbzonenregelung. Die Einstellung der Farbzonen ist aus der Maschinensteuerung bekannt.
   ∘ Zum Anderen bezüglich bereits eingeflossener Kompensationswerte.
- Ergebnis ist die lokale Färbungsabweichung in Form von Δ-Rastertonwerten in den Farbauszügen für die jeweils zutreffenden lokalen Rastertonwerte.
- Die bei dem aktuellen Druckauftrag eingestellten Einflussparameter, welche die Homogenität beeinflussen, werden dann vom Rechner 3, 6 aus der Steuerung ausgelesen und mit den Abweichungsdaten für spätere Analysen und Fallunterscheidungen abgespeichert. Dies sind neben den Farbregeleinstellungen z.B. Phase des Reibereinsatzes > Farbabfall, Vario an /aus > Variostreifen, Verbindung an / aus > Streifenbild, Farbwerkschaltung kurz / lang > Streifenbild und Andere.
- Dann folgt die iterative Wiederholung für eine Vielzahl weiterer Druckaufträge mit lokal unterschiedlichen Rastertonwerten in den Farbauszügen und die Analyse dieser Daten zur Ermittlung der Gesamt-Korrekturwerte 10.

Diese sind mehrdimensional bzgl.:
∘ Druckwerk bzw. Farbauszug BCMY
∘ Lokal über das Format Koordinaten X quer zur Druckrichtung und Y in Druckrichtung.
∘ Rastertonwert 0 - 100 %
∘ Der Parameter der bereits genannten Einflussfaktoren.

Mit zunehmender Anzahl an einfließenden Druckaufträgen wird somit die Güte der Korrekturwerte 10 immer weiter verbessert. Fließen bereits kompensierte Aufträge in die Sammlung mit ein, so sind deren Korrekturwerte 10 ebenso zu berücksichtigen. Läuft die Aufnahme der Färbungsabweichungen und deren Analyse parallel mit beim Druck der kompensierten Aufträge, so können die Korrekturwerte 10 vom Rechner 3, 6 selbstlernend optimiert werden.

Das finale Ergebnis der ersten Stufe des erfindungsgemäßen Verfahrens sind dann die über das Format verteilten, lokalen Korrekturwerte 10 für unterschiedliche Flächendeckungen in den einzelnen Farbauszügen CMYK 9 kombiniert mit Tags für färbungsbeeinflussende Einflussparameter 8.

Die zweite Stufe des Verfahrens betrifft die auftragsabhängige Kompensation der lokalen Färbungsinhomogenitäten durch den Rechner 3,6. Allgemein sind Verfahren zur Dichtekompensation auf den Grauwertbildern der separierten Farbauszüge vor dem Rastern als Vorkompensation in der Vorstufe bereits aus dem Digitaldruck bekannt. Diese Verfahren können auch hier zur Anwendung der in der ersten Stufe ermittelten, lokalen Korrekturwerte 10 für unterschiedliche Flächendeckungen verwendet werden. Die so erstellten korrigierten Druckdaten werden dann zur Herstellung der notwendigen Druckplatten der einzelnen Farbauszüge verwendet, mit denen der betreffende Druckauftrag dann durchgeführt wird.

Verfahren zur Online-Kompensation auf Basis bereits gerasterter Bilder sind im Offsetdruck allerdings nicht möglich. Da die lokalen Korrekturfaktoren nur auf Multilevel-Basis für einzelne Rastertonwerte ermittelt werden, muss bei der Kompensation für beliebige Werte zudem entsprechend zwischen bekannten benachbarten Werten interpoliert werden. Ebenso ist die Diskretisierung der Kompensationsfaktoren in XY-Richtung über das Format zu berücksichtigen. Auch ist hier für die lokale Kompensation entsprechend zwischen den Stützstellen zu interpolieren.

Sind die Korrekturwerte 10 zudem von den bereits genannten, sonstigen Einflussparametern 8 abhängig, so sind die Werte entsprechend der für den aktuellen Auftrag gewählten Einstellungen zu wählen und die Korrekturwerte 10 entsprechend anzupassen.

Das erfindungsgemäße Verfahren ist sehr vorteilhaft, da die Druckergebnisse bereits im Vorfeld verbessert werden, bevor überhaupt Farbregeleingriffe durchgeführt werden. Unter Umständen kann auf diese sogar verzichtet werden; mindestens wird deren Anzahl, bis zum Erreichen des Toleranzbereiches, deutlich reduziert. Dies führt zur Reduzierung von Makulatur im Offsetdruck. Bei Druckmaschinen 4 mit zonenlosen Farbwerken z.B. Anicolor wird zudem die erzielbare Färbungsqualität grundsätzlich verbessert, da bei diesen keine zonalen Korrekturen möglich sind. Die Kompensation des Farbabfalls oder anderer Färbungsinhomogenitäten ist erfindungsgemäß ebenso möglich. Hier ist der Vorteil des Verfahrens gegenüber dem Stand der Technik im Offsetdruck sogar noch größer, da es hier maschinenseitig keine direkten Korrekturmöglichkeiten gibt.

Das Verfahren ist in angepasster Form in einer weiteren Ausführungsvariante auch für Digitaldruckmaschinen z.B. Inkjet, anwendbar. Hier kommen zwar die Vorteile aufgrund der hier möglichen Online-Kompensation nicht so zum Tragen; allerdings kann auch beim Inkjet-Druck die Vorkompensation mit dem erfindungsgemäßen Verfahren verbessert werden.

### Bezugszeichenliste

- 1: Anwender
- 2: Bilderfassungssystem
- 3: Steuerungsrechner
- 4: Druckmaschine
- 5: Bildsensor
- 6: Bildverarbeitungsrechner
- 7: Display
- 8: Einflussparameter
- 9: korrigierte Delta-CMYK-Bilddaten
- 10: Korrekturwerte
- 11: Sollwerte für CMYK-Bilddaten
- 12: erfasste Bilddaten
- 13: CMYK-Bilddaten
- 14: Delta-CMYK-Bilddaten

## Patentansprüche

1. Verfahren zur Korrektur lokaler, maschinenbedingter Färbungsfehler in einer Offsetdruckmaschine (4) mit einem Bilderfassungssystem (2) durch einen Rechner (3, 6), die folgenden Schritte umfassend:
• Aufnahme von Druckbildern (12) während der Abarbeitung von mindestens einem Druckauftrag durch das Bilderfassungssystem (2)
• Durchführen einer Farbtransformation für die erfassten Druckbilder (12) mittels des Rechners (3, 6)
• Ermittlung von lokalen Delta-Werten (14) für Rastertonwerte durch den Rechner (3, 6) aus den farbtransformierten Bilddaten (13)
• Flächendeckungsabhängige Korrektur der Delta-Werte (9) für die Rastertonwerte durch den Rechner (3, 6)
• Auslesen und Analysieren von druckauftragsspezifischen Einflussparametern (8) aus der Steuerung der Offsetdruckmaschine durch den Rechner (3, 6)
• Ermittlung von Korrekturwerten (10) für die lokalen, maschinenbedingten Färbungsfehler aus den korrigierten Delta-Werten (9) für die Rastertonwerte und den druckauftragsspezifischen Einflussparametern (8) durch den Rechner (3, 6)
• Modifikation der Rastertonwerte nachfolgender Druckaufträge mit den ermittelten Korrekturwerten (10) durch den Rechner (3, 6) und Erzeugung von Druckplatten mit den modifizierten Rastertonwerten
• Durchführung der Druckaufträge mit den erzeugten Druckplatten

2. Verfahren nach Anspruch 1,
**dadurch gekennzeichnet,**
**dass** die Ermittlung von lokalen Delta-Werten (14) für die Rastertonwerte sowie die Modifikation der Rastertonwerte nachfolgender Druckaufträge für alle separierten Farbauszüge des jeweiligen Druckauftrages durchgeführt wird.

3. Verfahren nach einem der vorherigen Ansprüche,
**dadurch gekennzeichnet,**
**dass** die Aufnahme und Analyse der Druckbilder, sowie die Ermittlung der flächendeckungsabhängig korrigierten Delta-Werte (9) für die Rastertonwerte zur anschließenden Ermittlung der Korrekturwerte (10) für die lokalen, maschinenbedingten Färbungsfehler fortlaufend und iterativ während der Abarbeitung von Druckaufträgen geschieht.

4. Verfahren nach einem der vorherigen Ansprüche,
**dadurch gekennzeichnet,**
**dass** die druckauftragsspezifischen Einflussparameter (8) die Phase des Reibereinsatzes, Vario, Verbindung und Farbwerkschaltung umfassen.

5. Verfahren nach einem der Ansprüche 3 und 4,
**dadurch gekennzeichnet,**
**dass** die Korrekturwerte (10) für die lokalen, maschinenbedingten Färbungsfehler und die druckauftragsspezifischen Einflussparameter (8) vom Rechner (3, 6) für die fortlaufende und iterative Bearbeitung in einer Datenbank abgespeichert werden.

6. Verfahren nach einem der Ansprüche 3 bis 5,
**dadurch gekennzeichnet,**
**dass** der Rechner (3, 6) bei Verwendung bereits kompensierter, vorheriger Druckaufträge für die Ermittlung der Korrekturwerte (10) für die lokalen, maschinenbedingten Färbungsfehler deren bereits ermittelte Korrekturwerte (10) berücksichtigt und diese Korrekturwerte (10) selbstlernend optimiert.

7. Verfahren nach einem der vorherigen Ansprüche,
**dadurch gekennzeichnet,**
**dass** der Rechner (3, 6) die Farbtransformation der erfassten Druckbilder (12) mittels der Anwendung von ICC-Profilen vom RGB-Farbraum des Bilderfassungssystems (2) in den CMYK-Farbraum der Offsetdruckmaschine (4) durchführt und so die lokalen Delta-Werte (14) für Rastertonwerte ermittelt.

8. Verfahren nach einem der vorherigen Ansprüche,
**dadurch gekennzeichnet,**
**dass** die Modifikation der Rastertonwerte nachfolgender Druckaufträge für einzelne bekannte Rastertonwerte geschieht und benachbarte Werten vom Rechner (3, 6) interpoliert werden.

9. Verfahren nach einem der vorherigen Ansprüche,
**dadurch gekennzeichnet,**
**dass** der Rechner (3, 6) bei der flächendeckungsabhängigen Korrektur (9) der Delta-Werte für die Rastertonwerte den Einfluss der Farbzonenregelung, sowie bereits von der Farbregelung der Offsetdruckmaschine (4) eingeflossene Korrekturwerte (10) berücksichtigt.

## Claims

1. Method of correcting local machine-related colour defects in an offset printing press (4) with an image recording system (2) by means of a computer (3, 6), the method comprising the steps of
• recording printed images (12) by means of the image recording system (2) while at least one print job is being processed
• carrying out a colour transformation for the recorded printed images (12) by means of the computer (3, 6)
• determining local delta values (14) for halftone values by means of the computer (3, 6) and based on the image data (13) obtained by the colour transformation
• correcting the delta values (9) for the halftone values in an area coverage-dependent way by means of the computer (3, 6)
• reading print job-specific influencing parameters (8) out of the control of the offset printing press and analyzing them by means of the computer (3, 6)
• determining correction values (10) for the local machine-related colour defects on the basis of the corrected delta values (9) for the halftone values and of the print job-specific influencing parameters (8) by means of the computer (3, 6)
• modifying the halftone values of subsequent print jobs on the basis of the determined correction values (10) by means of the computer (3, 6) and creating printing plates on the basis of the modified halftone values
• carrying out the print jobs by means of the printing plates that have been created.

2. Method according to claim 1,
**characterized**
**in that** the steps of determining local delta values (14) of the halftone values as well as of modifying the halftone values of subsequent print jobs is implemented for all colour separations of the respective print job.

3. Method according to any one of the preceding claims,
**characterized**
**in that** the steps of recording and analyzing the printed images as well as of determinig the delta values (9) of the halftone values which have been corrected in an area coverage-dependent way for a subsequent determination of the correction values (10) for the local machine-related colour defects is done in a continuous and iterative process during the processing of print jobs.

4. Method according to any one of the preceding claims,
**characterized**
**in that** the print job-specific influencing parameters (8) comprise the phase of distributor roller use, vario, connection, and inking unit arrangement.

5. Method according to any one of claims 3 and 4,
**characterized**
**in that** the correction values (10) for the local machine-related colour defects and the print job-specific influencing parameters (8) are saved by the computer (3, 6) in a database for continuous and iterative processing,

6. Method according to any one of claims 3 to 5,
**characterized**
**in that** when using already compensated previous print jobs to determine the correction values (10) for the local machine-related colour defects, the computer (3, 6) factors in the already determined correction values (10) thereof and optimizes the said correction values (10) in a self-learning way.

7. Method according to any one of the preceding claims,
**characterized**
**in that** the computer (3, 6) carries out the colour transformation of the recorded printed images (12) from the RGB colour space of the image recording system (2) to the CMYK colour space of the offset printing machine (4) by means of the application of ICC profiles, thus determining the local delta values (14) for halftone values.

8. Method according to any one of the preceding claims,
**characterized**
**in that** the modification of the halftone values of subsequent print jobs is done for individual known halftone values and neighbouring values are interpolated by the computer (3,6).

9. Method according to any one of the preceding claims,
**characterized**
**in that** for the area coverage-dependent correction (9) of the delta values for the halftone values, the computer (3, 6) factors in the influence of ink zone control as well as correction values (10) which have already been provided by the colour control system of the offset printing press (4).

## Revendications

1. Procédé de correction par un ordinateur (3, 6) d'erreurs locales d'encrage imputables à lamachine dans une machine à imprimer offset (4) comportant un système de capture d'image (2), comprenant les étapes suivantes :
• enregistrement d'images d'impression (12) pendant le traitement d'au moins un travail d'impression par le système de capture d'image (2)
• réalisation d'une transformation de couleurs pour les images d'impression capturées (12) au moyen de l'ordinateur (3, 6) détermination de valeurs delta locales (14) pour des tonalités de trame par l'ordinateur (3, 6) à partir des données d'image avec transformation de couleurs (13)
• correction des valeurs delta (9) par l'ordinateur (3, 6) en fonction de la couverture de surface pour les tonalités de trame
• lecture et analyse par l'ordinateur (3, 6) de paramètres d'influence (8) spécifiques au travail d'impression à partir de la commande de la machine à imprimer offset
• détermination par l'ordinateur (3, 6) de valeurs de correction (10) pour les erreurs de coloration locales, imputables à la machine, à partir des valeurs delta corrigées (9) pour les tonalités de trame et des paramètres d'influence (8) spécifiques à la commande d'impression
• modification par l'ordinateur (3, 6) des tonalités de trame des travaux d'impression suivants avec les valeurs de correction (10) déterminées et production de plaques d'impression avec les tonalités de trame modifiées
• exécution des travaux d'impression avec les plaques d'impression produites

2. Procédé selon la revendication 1,
**caractérisé en ce**
**que** la détermination de valeurs delta locales (14) pour les tonalités de trame ainsi que la modification des tonalités de trame de travaux d'impression ultérieurs sont effectuées pour toutes les séparations de couleurs du travail d'impression considéré.

3. Procédé selon l'une des revendications précédentes,
**caractérisé en ce**
**que** l'enregistrement et l'analyse des images d'impression, ainsi que la détermination des valeurs delta (9) corrigées en fonction de la surface pour les valeurs de tonalité de trame en vue de la détermination ultérieure des valeurs de correction (10) pour les défauts de colorimétrie locaux imputables à la machine, s'effectuent de manière continue et itérative pendant le traitement des travaux d'impression.

4. Procédé selon l'une des revendications précédentes,
**caractérisé en ce**
en ce que les paramètres d'influence (8) spécifiques à la commande d'impression comprennent la phase de l'insert de friction, Vario, connexion et commande mécanique du dispositif d'encrage.

5. Dispositif selon l'une des revendications 3 à 4,
**caractérisé en ce**
**que** les valeurs de correction (10) pour les erreurs de colorimétrie locales, imputables à la machine, et les paramètres d'influence (8) spécifiques à la commande d'impression sont mémorisés par l'ordinateur (3, 6) dans une base de données pour le traitement continu et itératif.

6. Dispositif selon l'une des revendications 3 à 5,
**caractérisé en ce**
**que** l'ordinateur (3, 6), en cas d'utilisation de travaux d'impression précédents déjà compensés, tient compte, pour la détermination des valeurs de correction (10) pour les erreurs de colorimétrie locales imputables à la machine, de leurs valeurs de correction (10) déjà déterminées et optimise ces valeurs de correction (10) par auto-apprentissage.

7. Procédé selon l'une des revendications précédentes,
**caractérisé en ce**
**que** l'ordinateur (3, 6) effectue la transformation des couleurs des images imprimées (12) enregistrées au moyen de l'application de profils ICC de l'espace chromatique RGB du système de capture d'image (2) dans l'espace chromatique CMYK de la machine à imprimer offset (4) et détermine ainsi les valeurs delta locales (14) pour des tonalités de trame.

8. Procédé selon l'une des revendications précédentes,
**caractérisé en ce**
**que** la modification des tonalités de trame de travaux d'impression ultérieurs s'effectue pour des tonalités de trame individuelles connues et des valeurs voisines sont interpolées par l'ordinateur (3, 6).

9. Procédé selon l'une des revendications précédentes,
**caractérisé en ce**
**que** le calculateur (3, 6) tient compte, lors de la correction (9) en fonction de la couverture de surface des valeurs delta pour les tonalités de trame, de l'influence de la régulation des zones d'encrage, ainsi que des valeurs de correction (10) déjà intégrées par la régulation de l'encrage de la machine à imprimer offset (4).
